# EUROPÄISCHE PATENTSCHRIFT

(11) **EP 1 989 259 B1**
(45) Veröffentlichungstag und Bekanntmachung des Hinweises auf die Patenterteilung: **13.04.2016**
(21) Anmeldenummer: 06830780.0
(22) Anmeldetag: 21.12.2006
(51) Int. Cl.: C08L 67/02, C08L 33/00, C09D 133/00, C09D 167/02, C09J 133/00, C09J 167/00

(54) **SYNTHESE VON POLYESTER-PFROPF-POLY(METH)ACRYLAT-COPOLYMEREN**
SYNTHESIS OF POLYESTER-GRAFT-POLY(METH)ACRYLATE COPOLYMERS
SYNTHESE DE COPOLYMERES GREFFES POLYESTER-POLY(METH)ACRYLATE

(30) Priorität: 28.02.2006 DE 102006009511
(43) Veröffentlichungstag der Anmeldung: 12.11.2008
(73) Patentinhaber: Evonik Röhm GmbH, 64293 Darmstadt (DE)
(72) Erfinder: LÖHDEN, Gerd, 45136 Essen (DE); BALK, Sven, 60594 Frankfurt (DE); BRAND, Thorsten, 45772 Marl (DE); BRENNER, Gabriele, 48249 Dülmen (DE); ARNOLD, Thomas, 63571 Gelnhausen (DE); BAUMANN, Cornelia, 63589 Linsengericht (DE)
(86) Internationale Anmeldenummer: PCT/EP2006/070075
(87) Internationale Veröffentlichungsnummer: WO 2007/098819

(56) Entgegenhaltungen:
- EP-A- 0 542 105
- WO-A-01/90265
- DE-A- 4 015 018
- US-A1- 2004 044 117

## Beschreibung

### Gebiet der Erfindung

Die vorliegende Erfindung betrifft eine neuartige Synthese von (Meth)acrylat bepfropften Polyestern. Ein entscheidender Vorteil der beschriebenen Materialien ist dabei die Produktdarstellung ohne Einbau von Styrolen und die einfache Synthese.
Insbesondere liegt die Neuheit der vorliegenden Erfindung in der gezielten Aktivierung von Itaconatwiederholungseinheiten in Polyestern zu multifunktionellen Initiatoren für die radikalische Polymerisation von Acrylaten, Methacrylaten oder deren Mischungen. Es wurde überraschend gefunden, dass für eine solche Polymerisation kein Zuschlag von Styrol bzw. styrolartigen Derivaten nötig ist, um eine erfolgreiche Pfropfung durchzuführen.
Weiterhin ist die Ermittlung eines geeigneten Itaconatgehaltes im eingesetzten Polyester Gegenstand der vorliegenden Erfindung. Bei einem zu hohen Doppelbindungsgehalt treten Vernetzungsreaktionen auf. Bei einem zu geringen ist der Anteil gebildeter Pfropfcopolymere in der Produktmischung zu gering.

### Stand der Technik

Die Synthese von Polymerarchitekturen, die auf einer Kombination von Polyestern und Poly(meth)acrylaten basieren, ist schon seit Mitte der 1960er Jahre Thema der industriellen Forschung. Die potentiellen Anwendungen solcher Materialien umfassen dabei z.B. Dispergiermittel (siehe z.B. EP 1 555 174), Imprägniermittel (GB 1,007,723), Bindemittel für Beschichtungen (z.B. beschrieben in DE 1 006 630, JP 09 216 921 oder DE 4 345 086) oder für Klebemassen (z.B. in DE 1 006 630).

Erste Beschreibungen der simultanen Synthese von Polyestern und Polymethacrylaten liegen bereits aus dem Jahr 1963 vor. In GB 1,007,723 wird die simultane radikalische Polymerisation von (Meth)acrylaten und die Polykondensation von Disäuren und Diolen zu Polyestern beschrieben. Dabei wird auch der Zuschlag von Itaconsäure aufgeführt. Diese wird jedoch nur bezüglich einer möglichen Einpolymerisation in (Meth)acrylatanteil beschrieben.
In DE 1 006 630 wird zur Herstellung von Klebemassen ein analoges Verfahren einer in situ Polymerisation gewählt. In der Beschreibung wird ebenfalls die Zugabe von Itaconsäure zur Reaktionsmischung angegeben und das mögliche Vorliegen von Pfropfcopolymeren im Produkt umschrieben.
In beiden Erfindungen handelt es sich jedoch um unkontrollierte Verfahren, die zu Produktmischungen mit einer Vielzahl verschiedenster Komponenten führen. Dem Fachmann ist leicht ersichtlich, dass unter den Bedingungen einer Kondensationspolymerisation die in situ durchgeführte freie radikalische Polymerisation zu Nebenreaktionen wie einer Teilgelierung der Produkte führen muss. Solche Vernetzungen sind jedoch selbst im Falle eines nur geringen Auftretens für die Produktaufarbeitung von großem Nachteil. Ziel der vorliegenden Erfindung ist dagegen die gezielte Synthese von Pfropfcopolymeren die zum einen zu ungelierten Produkten führen und zum anderen als Nebenprodukte ausschließlich die jeweiligen Polyester- bzw. Poly(meth)acrylat-Homopolymere enthalten.

Die Möglichkeiten der gezielten Kombination von Poly(meth)acrylaten und Polyestern sind vielfältig. Neben den erfindungsgemäßen Pfropfcopolymeren mit Polyester Hauptketten und (Meth)acrylat Seitenketten ist auch eine inverse Polymerarchitektur eines Poly(meth)acrylat-*pfropf*-polyester mittels der so genannten "Makromonomermethode" (beschrieben in EP 1 555 274) zugänglich. Diese Produkte unterscheiden sich in ihren Eigenschaften jedoch grundsätzlich von den erfindungsgemäßen Pfropfcopolymeren.

Das gezielte Aufpfropfen von (Meth)acrylaten erfolgt überwiegend auf Polyester, die olefinische Gruppen innerhalb der Hauptkette aufweisen. Diese wurden zumeist durch Einbau der Butendisäuren Maleinsäure und Fumarsäure bzw. Maleinsäureanhydrid eingeführt. Es ist unter Fachleuten allgemein bekannt, dass auf diese olefinischen Gruppen keine Methacrylate bzw. Acrylate direkt gepfropft werden können. Daher bedient man sich einer geringen Zumischung Styrol bzw. Styrol analoger Verbindungen, die sowohl mit (Meth)acrylaten copolymerisiert werden können, als auch auf die olefinischen Bindungen der Maleinsäure bzw. Fumarsäure-Wiederholungseinheiten gepfropft werden können. Das, Pfropfen auf Maleinsäure haltige Polyester wird z.B. in DE 4 427 227, DE 4 345 086, WO 2005 / 059 049 und in Zhu et al., Angew. Makrom. Chem. (171, S. 65-77, 1989) beschrieben. Entsprechende Reaktionen mit Fumarsäure Wiederholungseinheiten kann man in DE 2 951 214, JP 09 216 921 und in Shimizu et al., J. of Appl. Polym. Sci. (76, S. 350-356, 2000) nachlesen. Es sei bemerkt, dass in einigen der aufgeführten Schriften, allgemein über ungesättigte Polyester geschrieben wird. Aus den Beispielen und den Unteransprüchen geht jedoch immer hervor, dass Itaconsäure nicht eingesetzt oder getestet wurde. Auch wurde in allen aufgeführten Schriften zur Erfüllung der gestellten Aufgabe Styrol copolymerisiert.

Der Einbau von Styrol führt jedoch zu einigen Nachteilen des Produktes. Zum einen erfolgt die freie radikalische Polymerisation nie unter einem vollständigen Umsatz aller Monomere. Im Fall diverser Anwendungen z.B. in Bereichen mit Lebensmittelkontakt oder bei Gegenständen, mit denen Kinder in direkten Kontakt kommen können, sind aromatische Restmonomere jedoch unerwünscht. Aus diesen Gründen wird eine Synthesemethode, die ohne Einbau solcher radikalisch polymerisierbarer Aromaten vorgenommen werden kann, klar bevorzugt. Hinzu kommt die von aromatischen Restmonomeren oft ausgehende Geruchsbelästigung bei einer späteren Verarbeitung.

In EP 0 631 198 wird ebenfalls die Pfropfung von Styrol haltigen Methacrylatmischungen auf mit Itaconsäure modifizierte Polyester beschrieben. In diesem Patent weisen die beispielsgemäßen Polyester einen relativ hohen Itaconatgehalt auf. Dem Fachmann ist leicht ersichtlich, dass die Verwendung von Materialien mit besonders hohem Gehalt radikalisch polymerisierbarer Gruppen im Präpolymer zu Vernetzungen bzw. Vergelungen führen muss. Nachteil solcher Polymere ist eine deutliche Erhöhung der Materialviskosität, was wiederum zu einer schlechten Verarbeitbarkeit des Materials führt.

In US 3,978,261 wird die Synthese von (vernetzten) Core-Shell-Partikeln unter Initiierung einer freien radikalischen Polymerisation ausgehend von Polyestern mit ungesättigten Gruppen beschrieben. Die Synthese erfolgt ausschließlich unter zusätzlichem Einbau von Glycidylmethacrylat. Die Darstellung von Pfropfcopolymeren ist nicht Bestandteil der Patentschrift.

Im Weiteren werden mit der Bezeichnung (Meth)acrylat Monomere aus der Gruppe der Acrylate und / oder der Methacrylate und / oder Mischungen aus Acrylaten, Methacrylaten oder beiden bezeichnet.

### Aufgabe

Aufgabe der vorliegenden Erfindung war es, ein Gemisch aus Poly(meth)acrylaten, Polyestern und Copolymeren aus Polyestern und Polymethacrylaten zu synthetisieren.

Insbesondere war es Aufgabe der vorliegenden Erfindung, als besagte Copolymere Polymerarchitekturen auf der Basis von Polyester-pfropf-Poly(meth)acrylat Copolymeren zu synthetisieren. Ferner bestand die Aufgabe darin, ein von Styrol bzw. Styrolanaloga freies Produkt darzustellen, und ein möglichst einfaches Syntheseverfahren zu entwickeln.

Die erfindungsgemäßen Pfropfcopolymere sollen primär als Verträglichkeitsvermittler (Kompatibilisierer) zwischen Poly(meth)acrylaten und Polyestern dienen. Aufgabe ist es daher, eine Mischung aus Polyestern, Poly(meth)acrylaten und Polyester-pfropf-Poly(meth)acrylat Copolymeren herzustellen.

### Lösung

Die Aufgabe wird gelöst durch eine freie radikalische Polymerisation geeigneter Komponenten zu dem Polymertyp B. Diese Polymerisation wird in Gegenwart von Polymertyp A in der Gestalt durchgeführt, dass sich zusätzlich der Polymertyp AB ausbilden kann. Die Aufgabe wurde gelöst durch eine Zusammensetzung dreier verschiedener Polymertypen A, B und AB wobei der
➢ Polymertyp A ein Copolyester ist, der unter Co-Kondensation von Itaconsäure hergestellt wurde,
➢ der Polymertyp B ein (Meth)acrylathomo- und/oder -copolymer und
➢ der Polymertyp AB ein Pfropfcopolymer aus Polymertyp A und Polymertyp B ist.

Überraschend wurde gefunden, dass auf den Einsatz von Styrol bzw. Styrolderivaten verzichtet werden kann.

Vorzug der vorliegenden Erfindung gegenüber dem Stand der Technik ist es u.a., dass das Bepfropfen der Polyester auf chemisch aktivere, aus der Polyesterkette herausstehende C-C-Doppelbindungen erfolgt. Dazu werden Polyester verwendet, in die Itaconsäure einkondensiert wurde. Zwar gibt es bis dato Beschreibungen von Bepfropfungen solcher Materialien mit (Meth)acrylaten. Nachzulesen sind diese z.B. in JP 60 175 045, JP 48 043 144 oder in EP 0 631 198. Aus der Beschreibung und den Beispielen in den aufgeführten Schriften geht jedoch klar hervor, dass die Synthese ausschließlich unter Copolymerisation mit Styrol erfolgt.

### Der Polymertyp A

Als Polymertyp A werden erfindungsgemäß Copolyester verwendet, die sich durch Itaconsäure als Monomerbaustein auszeichnen. Die Copolyester im Sinne der Erfindung haben eine lineare oder verzweigte Struktur und sind gekenntzeichnet durch
- OH-Zahlen von 5 bis 150 mg KOH / g, vorzugsweise von 10 bis 50 mg KOH / g
- Säurezahlen von unter 10 mg KOH / g, bevorzugt unter 5 mg KOH / g und besonders bevorzugt unter 2 mg KOH / g.
- ein zahlenmittleres Molekulargewicht von 700 - 25000 g / mol, vorzugsweise 2000 - 12000 g / mol.

Der Gehalt an Itaconsäure in den erfindungsgemäßen Polyestern liegt im Bereich zwischen 0,1 Mol% und 20 Mol%, bevorzugt zwischen 1 Mol% und 10 Mol% und ganz besonders bevorzugt zwischen 2 Mol% und 8 Mol%, bezogen auf die Gesamtmenge an eingesetzten Polycarbonsäuren. Ansonsten ist die Art der für die erfindungsgemäßen Copolyester eingesetzten Polycarbonsäuren an sich beliebig. So können aliphatische und/oder cycloaliphatische und/oder aromatische Polycarbonsäuren enthalten sein. Unter Polycarbonsäuren sind Verbindungen zu verstehen, die bevorzugt mehr als eine und besonders bevorzugt zwei Carboxylgruppen tragen; abweichend von der allgemeinen Definition sind in besonderen Ausführungsformen auch Monocarbonsäuren darunter zu verstehen.

Beispiele für aliphatische Polycarbonsäuren sind Bernsteinsäure, Glutarsäure, Adipinsäure, Azelainsäure, Sebacinsäure, Dodecandisäure, Tetradecandisäure, Octadecandisäure. Beispiele für cycloaliphatische Polycarbonsäuren sind die Isomere der Cyclohexandicarbonsäure. Beispiele für aromatische Polycarbonsäuren sind die Isomere der Benzoldicarbonsäure und Trimellitsäure. Gegebenenfalls können an Stelle der freien Polycarbonsäuren auch ihre veresterbaren Derivate wie z. B. entsprechende Niedrigalkylester oder cyclische Anhydride eingesetzt werden.

Die Art der für die erfindungsgemäßen Hydroxylpolyester eingesetzten Polyole ist an sich beliebig. So können aliphatische und/oder cycloaliphatische und/oder aromatische Polyole enthalten sein. Unter Polyolen sind Verbindungen zu verstehen, die bevorzugt mehr als eine und besonders bevorzugt zwei Hydroxylgruppen tragen; abweichend von der allgemeinen Definition sind in besonderen Ausführungsformen auch Monohydroxyverbindungen darunter zu verstehen.

Beispiele für Polyole sind Ethylenglykol, Propandiol-1,2, Propandiol-1,3, Butandiol-1,4, Pentandiol-1,5, Hexandiol-1,6, Nonandiol-1,9, Dodecandiol-1,12, Neopentylglykol, Butylethylpropandiol-1,3, Methylpropandiol-1,3, Methylpentandiole, Cyclohexandimethanole, Trimethylolpropan, Pentaerythrol und Mischungen daraus.

Unter aromatischen Polyolen sind Umsetzungsprodukte von aromatischen Polyhydroxyverbindungen wie z. B. Hydrochinon, Bisphenol A, Bisphenol F, Dihydroxynaphthalin etc. mit Epoxiden wie z. B. Ethylenoxid oder Propylenoxid zu verstehen. Als Polyole können auch Etherdiole, d. h. Oligomere bzw. Polymere, z. B. auf Basis Ethylenglykol, Propylenglykol oder Butandiol-1,4 enthalten sein. Besonders bevorzugt sind lineare aliphatische Glykole.

Neben Polyolen und Dicarbonsäuren können auch Lactone für die Synthese der Hydroxylpolyester verwendet werden.

Die erfindungsgemäßen Copolyester mit Itaconsäuregehalten zwischen 0,1 Mol% und 20 Mol%, bevorzugt zwischen 1 Mol% und 10 Mol% und ganz besonders bevorzugt zwischen-2 Mol% und 8 Mol%, bezogen auf die Gesamtmenge an eingesetzten Polycarbonsäuren werden mittels etablierter Techniken für (Poly-)Kondensationsreaktionen hergestellt. Sie können z. B. durch Kondensation von Polyolen und Polycarbonsäuren oder deren Ester, Anhydride oder Säurechloride in einer Inertgasatmosphäre bei Temperaturen von 100 bis 260 °C, vorzugsweise von 130 bis 240 °C, in der Schmelze oder in azeotroper Fahrweise gewonnen werden, wie es z. B. in Methoden der Organischen Chemie (Houben-Weyl), Bd. 14/2, 1 - 5, 21 - 23, 40 - 44, Georg Thieme Verlag, Stuttgart, 1963, bei C. R. Martens, Alkyl Resins, 51 -59, Reinhold Plastics Appl., Series, Reinhold Publishing Comp., New York, 1961 oder in den DE-OSS 27 35 497 und 30 04 903, beschrieben ist.

Die Mengen, die an Polymertyp A vor der Pfropfreaktion in der erfindungsgemäßen Mischung eingesetzt werden, liegen zwischen 10 Gew.-% und 90 Gew.-%, bevorzugt zwischen 25 Gew.-% und 75 Gew.-% und ganz besonders bevorzugt zwischen 40 Gew.-% und 60 Gew.-%.

Die Mengen, die an Polymertyp A in der erfindungsgemäßen Mischung nach der Reaktion vorliegen, liegen zwischen 5 Gew.-% und 80 Gew.-%, bevorzugt zwischen 5 Gew.-% und 60 Gew.-% und ganz besonders bevorzugt zwischen 5 Gew.-% und 40 Gew.-%.

### Der Polymertyp B

Der Polymertyp B kann als Nebenprodukt bei der Synthese des Pfropfcopolymerisats AB entstehen. Die Zusammensetzung der B-Ketten in dem Produktbestandteil AB entspricht ebenfalls der folgenden Beschreibung:
Polymertyp bzw. Kettensegment B besteht definitionsgemäß aus Polyacrylat- und/oder Polymethacrylat-Sequenzen. Diese sind für sich genommen, z. B. in Form eines entsprechenden Homo- oder Copolymerisats im Lösungsmittelsystem L löslich. Das Polymerisat B ist im Allgemeinen zu mehr als 50 Gew.-%, vorzugsweise zu 80 Gew.-% bis 100 Gew.-% aufgebaut aus Monomeren der Formel I 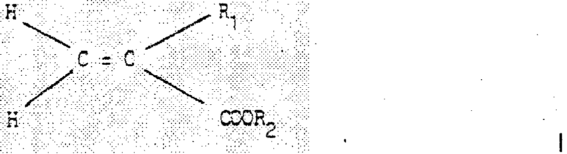
worin R₁ für Wasserstoff oder Methyl und R₂ für einen Alkylrest, einen aliphatischen oder aromatischen Rest mit 1 bis 30 Kohlenstoffatomen, vorzugsweise 1 bis 20 Kohlenstoffatomen, steht.

Im Polymer B können ferner als Bausteine enthalten sein:

Monomere der Formel II 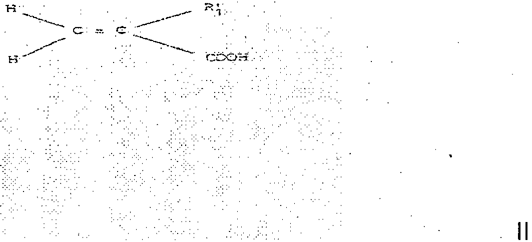 worin R'₁ für Wasserstoff oder Methyl steht oder/und polymerisationsfähige Säureanhydride und/oder Monomere der Formel III 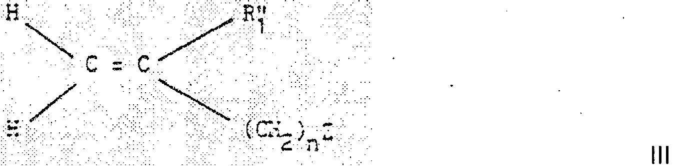 worin R"₁ Wasserstoff oder Methyl und Z einen -COR₃-Rest, einen 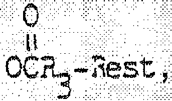 einen -OR₄-Rest oder ein Chloratom bedeutet und worin R₃ und R₄ für einen gegebenenfalls verzweigten Alkylrest mit 1 bis 20 Kohlenstoffatomen oder für einen Phenylrest und n für 0 oder 1 steht,
und/oder Monomere der Formel IV 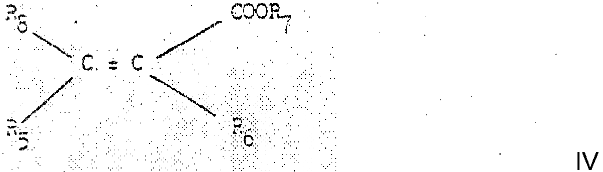 worin R₅ und R₆ Wasserstoff oder einen Rest -COOR'₇, R₆, Wasserstoff oder einen Rest -CH₂COOR"₇ bedeuten mit der Maßgabe, daß die Verbindung der Formel IV zwei carboxylhaltige Gruppen enthalten muß und worin R₇, R'₇ und R"₇ für Wasserstoff oder einen gegebenenfalls verzweigten Alkylrest mit 1 bis 20 Kohlenstoffatomen oder Phenyl stehen. Das Polymere B kann gegebenenfalls noch Anteile der Monomeren der Formel V enthalten 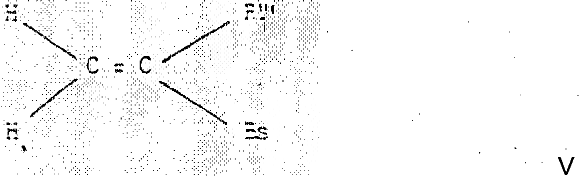 worin R"'₁ die Bedeutung von R₁ besitzt und Bs für einen stickstoffhaltigen funktionellen Rest wie eine -CN Gruppe, eine Gruppe -CONR₉R₁₀ worin R₉ und R₁₀ unabhängig voneinander für Wasserstoff oder einen Alkylrest mit 1 bis 20 Kohlenstoffatomen steht, oder worin R₉ und R₁₀ unter Einbeziehung des Stickstoffs einen heterocyclischen 5- oder 6-Ring bilden oder worin Bs für einen (inerten) heterocyclischen Rest, insbesondere einen Pyridin-, Pyrolidin-, Imidazol-, Carbazol-, Lactam-Rest bzw. alkylierte Derivate derselben steht oder Bs die Bedeutung -CH₂OH besitzt, oder worin Bs die Bedeutung

-COO-Q-R₁₁

besitzt, worin Q für einen, gegebenenfalls alkylsubstituierten Alkylenrest mit 2 bis 8 Kohlenstoffatomen und R₁ₗ, für -OH, für -OR'"₇ oder für einen Rest -NR'₉R'₁₀ steht, wobei R"'₇, R'₉ und R'₁₀ die gleichen Bedeutungen wie R₇, R₈ und R₉ besitzen, z. B. zusammen mit dem Stickstoffatom, gegebenenfalls unter Einbeziehung eines weiteren Heteroatoms einen fünf- bis sechsgliedrigen heterocyclischen Ring bilden.

Als Beispiele für die Monomere der Formel I werden Methylmethacrylat, Ethylmethacrylat, Propylmethacrylat, Butylmethacrylat und Isobutylmethacrylat genannt. Die Monomere der Formel I werden auch als Standardmethacrylate bezeichnet.

Als Beispiele für die Monomere der Formel II werden Acrylsäure oder Methacrylsäure genannt.

Als Beispiele für Monomeren der Formeln III bzw. IV seien besonders genannt Vinylchlorid, Vinylacetat, Vinyilstearat, Vinylmethylketon, Vinylisobutyläther, Allylacetat, Allylchlorid, Allylisobutylether, Allylmethylketon, Dibutylmaleinat, Dilaurylmaleinat, Dibutylitaconat. Der Anteil der Monomeren der Formel II-V am Polymer B liegt im Allgemeinen zwischen 0 Gew.-% und 50 Gew.-%, vorzugsweise bei 0 Gew.-% bis 20 Gew.-%, (bezogen auf die Monomeren des Polymer B). Der Anteil der Monomeren der Formeln II und/oder V am Polymer B wird im allgemeinen 20 Gew.-% nicht überschreiten, in der Regel liegt er bei 0 Gew.-% bis 10 Gew.-%, vorzugsweise 0 Gew.-% bis 5 Gew.-%.

Im Einzelnen wird das Polymer B nach Anteil und Zusammensetzung zweckmäßigerweise im Hinblick auf die gewünschte technische Funktion gewählt werden.

Es können auch unter gleichzeitigem Vorliegen eines Polymertyps A und unter Zugabe eines Initiators Monomere, die zu einem Polymer des Typs B führen, polymerisiert werden.

Die Mengen an Monomeren, die in der Polymerisation Polymertyp B bildend in der erfindungsgemäßen Mischung eingesetzt werden, liegen zwischen 10 Gew.-% und 90 Gew.-%, bevorzugt zwischen 25 Gew.-% und 75 Gew.-% und ganz besonders bevorzugt zwischen 40 Gew.-% und 60 Gew.-%.

Die Mengen, die an Polymertyp B in der erfindungsgemäßen Mischung nach der Reaktion vorliegen, liegen zwischen 5- Gew.-% und 80 Gew.-%, bevorzugt zwischen 5 Gew.-% und 60 Gew.-% und ganz besonders bevorzugt zwischen 5 Gew.-% und 40 Gew.-%.

### Der Polymertyp AB

### Herstellung der Pfropfcopolymerisate AB

Das erfindungsgemäße Verfahren zur Herstellung eines Pfropfcopolymerisats AB zeichnet sich dadurch aus, dass durch Reaktion eines geeigneten, weiter unten beschriebenen Initiators mit Doppelbindungen von Itaconatwiederholungseinheiten im Polymer des Typs A mehrere reaktive (radikalische) Zentren für eine radikalische Polymerisation von (Meth)acrylaten gebildet werden. Diese reaktiven Zentren können simultan oder auch zeitlich versetzt gebildet werden. Somit können Itaconateinheiten auch durchaus erst aktiviert werden, nachdem die an anderen Itaconatbausteinen gebildeten Radikale durch Abbruchreaktionen deaktiviert wurden. Vorzugsweise wird daher das Polymer A mit dem Initiator vorgelegt und für eine Zeit zwischen 10 min und 60 min erhitzt, bevor eines oder mehrere der beschriebenen Monomere I-V zur Bildung des Typs B zugegeben werden.

Das Pfropfpolymerisat AB wird in der Regel hergestellt, indem man auf die Komponente A die Komponente B unter den dafür geeigneten Reaktionsbedingungen aufpfropft. Bei dem Polymertyp AB handelt es sich um ein Pfropfcopolymerisat mit Polyesterhauptketten und Poly(meth)acrylatseitenketten.

Dazu stellt man eine 10 Gew.-% - 50 Gew.-%, vorzugsweise 20 Gew.-% - 30 Gew.-%, Lösung des erfindungsgemäßen Polyesters mit Itaconatwiederholungseinheiten in einem geeigneten, unter Polymerisationsbedingungen inerten Lösungsmittel, das im Normalfall einen Siedepunkt oberhalb der Verfahrenstemperatur besitzt, her. Als Lösungsmittel verwendet man die herkömmlichen Lösungsmittel für Lösungspolymerisationen, die für die entsprechenden Ester geeignet sind. So kommen z.B. Essigester wie Ethyl-, Propyl- oder Butylacetat, aliphatische Lösungsmittel wie Isooctan, cycloaliphatische wie Cyclohexan und carbonylische wie Butanon in Frage.
Der Anteil des Lösungsmittels oder des Lösungsmittelgemisches an den erfindungsgemäß konzentrierten Polymerisatdispersionen kann z.B. 80 Gew.-%, in besonders günstigem Fall bis herab zu 20 Gew.-% betragen, vorzugsweise unter 70 Gew.-%, praktisch meist 60 Gew.-% bis 40 Gew.-%.
Zu den Polyester-Lösungen gibt man die Monomeren der Formel I bzw. eventuell die anderen Monomeren II-V in den angegebenen Verhältnissen und polymerisiert unter Zusatz eines oder mehrerer, vorzugsweise peroxidischer Radikal-Initiatoren bei Temperaturen von -10 Grad C bis 100 Grad C innerhalb von gewöhnlich 4 - 8 Stunden. Anzustreben ist ein möglichst vollständiger Umsatz. Vorzugsweise finden Azoverbindungen wie AIBN oder Perester wie tert.-Butylperoctoat als Radikalinitiator Verwendung. Die Initiatorkonzentration richtet sich nach der Zahl der gewünschten Pfropfstellen und dem gewünschten Molekulargewicht des Segments B. Im Allgemeinen liegt die Initiatorkonzentration zwischen 0,1 Gew.-%, und 3 Gew.-%, bezogen auf das Polymerisat.

Gegebenenfalls können zur Einstellung des gewünschten Molekulargewichts der Segmente B noch Regler mitverwendet werden. Als Regler eignen sich z. B. Schwefelregler, insbesondere mercaptogruppenhaltige Regler, z.B. Dodecylmercaptan. Die Konzentrationen an Reglern liegen im Allgemeinen bei 0,1 Gew.-%, bis 1,0 Gew.-%, bezogen auf das Gesamtpolymerisat.

Neben der beschriebenen Methode der Lösungspolymerisation kann die Synthese der Pfropfcopolymere des Typs AB auch über Emulsionspolymerisation, Mini- oder Mikroemulsionspolymerisation oder Substanzpolymerisation dargestellt werden. Beispielsweise werden bei der Substanzpolymerisation die Polyester vor der Initierung der radikalischen Polymerisation in der (meth)acrylischen Monomermischung gelöst.
Alternativ kann Radikal-Initiator auch in einer Schmelze des Polyesters vorgelegt und anschließend mit der Monomermischung versetzt werden.

Die Mengen an Polymertyp AB nach der Pfropfreaktion in der erfindungsgemäßen Mischung liegen zwischen 10 Gew.-% und 80 Gew.-%, bevorzugt zwischen 20 Gew.-% und 65 Gew.-% und ganz besonders bevorzugt zwischen 30 Gew.-% und 50 Gew.-%.

Der durchschnittliche Anteil der Poly(meth)acrylate im Polymeranteil der Gesamtmischung beträgt zwischen 20 Gew-% und 80 Gew-%, bevorzugt zwischen 30 Gew.-% und 70 Gew.-% und ganz besonders bevorzugt zwischen 40 Gew.-% und 60 Gew.-%. Diese Angaben beziehen sich auf die Summe der Poly(meth)acrylate des Typs B und der Poly(meth)acrylat-Anteile in den Pfropfcopolymeren des Typs AB.

Überraschend wurde gefunden, dass der Polymertyp AB ein hervorragender Verträglichkeitsvermittler zwischen Poly(meth)acrylaten und Polyestern ist.
Die Verbesserung der Kompatibilität zwischen Poly(meth)acrylaten und Polyestern führt zu neuen Materialklassen mit positiven Eigenschaftsverbesserungen z.B. für folgende Anwendungen: Beschichtungsformulierungen, Heißsiegellacke oder als Präpolymere zur Synthese von Elastomeren, die wiederum als Dichtmasse Verwendung finden könnten.

### Beispiele

Nachfolgend ist die vorliegende Erfindung anhand von Beispielen und Vergleichsbeispielen beschrieben. Die Erfindung beschränkt sich jedoch nicht ausschließlich auf diese Beispiele.

### Allgemeine Angaben zur Produktcharakterisierung:

Die in den folgenden Tabellen angegebenen Werte für den Polymolekularitätsindex, PMI wurden mittels Gelpermeationschromatographie bestimmt. Dabei gilt PMI = M_{w} / Mₙ = massenmittleres Molekulargewicht / zahlenmittleres Molekulargewicht. Die gelpermeationschromatographische Charakterisierung aller Proben erfolgte in Tetrahydrofuran als Eluent nach DIN 55672-1. Die Verseilung der Polyesteranteile im Endprodukt wurde dabei mittels UV-Detektion bei einer Wellenlänge von 300 nm bestimmt. Die Gesamtverteilung mittels RI-Detektion ermittelt.
Die Phasenübergangstemperaturen (z.B. Glasübergangstemperaturen T_{g}) wurden mittels DSC nach DIN EN ISO 11357-1 gemessen. Die angegebenen Werte wurden einem zweiten Aufheizzyklus entnommen.
Der Gehalt an Itaconatwiederholungseinheiten im Copolyester(-block) vor und nach der Pfropfreaktion wurde durch ¹H-NMR-Spektroskopie (500 MHz) quantifiziert.
Vor der Charakterisierung wurde ggf. das Lösungsmittel mittels Rotationsverdampfer entfernt und die Proben über Nacht bei 60 °C im Vakuumtrockenschrank getrocknet.

Herstellung der erfindungsgemäßen Copolyester (Komponente A):

### Vergleichsbeispiel V1:

Isophthalsäure (434 g, 2.6 mol); Terephthalsäure (290 g, 1.7⁻ mol), Monoethylenglykol (120 g, 1.9 mol), Neopentylglykol (129 g, 1.2 mol) und Hexandiol-1,6 (211 g, 1.8 mol) werden in einem 2 I-Kolben mit Kolonne und Destillationsaufsatz im Stickstoffstrom aufgeschmolzen. Bei Erreichen einer Temperatur von 170 °C beginnt Wasser abzudestillieren. Innerhalb zwei Stunden wird die Temperatur sukzessive auf 240 °C erhöht. Nach etwa vier weiteren Stunden bei dieser Temperatur verlangsamt sich die Wasserabspaltung. Es werden 150 mg Titantetrabutoxid eingerührt und im Vakuum weiter gearbeitet, welches im Verlauf der Reaktion so angepaßt wird, daß immer noch Destillat anfällt. Nach Erreichen des gewünschten Hydroxyl- und Säurezahlbereiches wird abgestellt. Charakteristika von Polyester V1 sind in Tabelle 1 gezeigt.

### Vergleichsbeispiel V2 und Beispiele 1 - 4:

Die Synthese der Polyester V2 sowie 1 - 4 erfolgt in Anlehnung an Vergleichsbeispiel V1. Es wird lediglich jeweils Itaconsäure als Comonomer eingesetzt, wobei Isophthalsäure und Terephthalsäure je zur Hälfte durch die eingesetzte Itaconsäuremenge substituiert werden. Charakteristika der so erhaltenen Polyester V2 sowie 1 - 4 sind in Tabelle 1 aufgeführt.

**Tabelle 1:**

| Beispiel-Nr. | ITA | OHZ | SZ | M_{w} (UV) | PMI (UV) |
|---|---|---|---|---|---|
| V1 | 0 | 20 | 1,2 | 18 900 | 1,7 |
| V2 | 23* | Teilvernetzt | | | |
| 1 | 1 | 36 | 2,6 | 11 700 | 1,9 |
| 2 | 2 | 35 | 1,2 | 13 400 | 2,1 |
| 3 | 3 | 42 | 1,8 | 15 800 | 2,2 |
| 4 | 7 | 37 | 0,9 | 27 300 | 6,8 |

| | | | | | |
|---|---|---|---|---|---|
| * löslicher Anteil ITA = Gehalt an Itaconatwiederholungseinheiten im Cöpolyester, bezogen auf den Gesamtgehalt an Polycarbonsäuren, Angabe in mol %, gemessen mit ¹H-NMR-Spektroskopie OHZ = Hydroxylzahl, Angabe in mg KOH / g, gemessen nach DIN 53240-2 SZ = Säurezahl, Angabe in mg KOH / g, gemessen nach DIN EN ISO 2114 Mw (UV) = Massenmittleres Molgewicht (GPC, UV-Detektion), Angabe in g / mol PMI (UV) = Polymolekularitätsindex (GPC, UV-Detektion) | | | | | |

Herstellung der erfindungsgemäßen Mischungen aus den Komponenten A, B und AB

### Beispiele für Lösungspolymerisation

### Vergleichsbeispiel V3

In einem Doppelmantelgefäß mit angeschlossenem Thermostaten, Rückflusskühler, Blattrührer und Innenthermometer werden 42 g Propylacetat und 13 g Polyester V1 vorgelegt. Unter Rühren wird der Polyester bei 90 °C vollständig aufgelöst und anschließend mit 0,15 g t-Butyl-per-2-ethylhexanoat versetzt. Um eine optimale Ausbeute freier Radikale entlang der Polyesterketten zu bilden, wird diese Lösung über einen Zeitraum von 30 min bei 90 °C gerührt, bevor mittels einer Dosierpumpe 19,2 g Methylmethacrylat und weitere 0,15 g t-Butyl-per-2-ethylhexanoat zügig zudosiert werden.
Nach insgesamt 150 min Reaktionszeit wird die Polymerlösung abgekühlt und zur Verringerung der Lösungsviskosität mit 13,5 g Propylacetat verdünnt.

### Beispiel 5a

Analoge Durchführung zu Vergleichsbeispiel V3 unter Verwendung des Polyesters 1 anstelle des Polyesters V1.

### Beispiel 5b

Analoge Durchführung zu Vergleichsbeispiel V3 unter Verwendung des Polyesters 2 anstelle des Polyesters V1.

### Beispiel 5c

In einem Doppelmantelgefäß mit angeschlossenem Thermostaten, Rückflusskühler, Blattrührer und Innenthermometer werden 55 g Propylacetat und 24 g Polyester 3 vorgelegt. Unter Rühren wird der Polyester bei 85 °C vollständig aufgelöst und anschließend mit 0,5 g t-Butyl-per-2-ethylhexanoat versetzt. Um eine optimale Ausbeute freier Radikale entlang der Polyesterketten zu bilden, wird diese Lösung über einen Zeitraum von 30 min bei 85 °C gerührt, bevor mittels einer Dosierpumpe 36,4 g Methylmethacrylat zügig zudosiert wird.
Nach insgesamt 150 min Reaktionszeit wird die Polymerlösung abgekühlt und zur Verringerung der Lösungsviskosität mit 13,5 g Propylacetat verdünnt.

### Beispiel 5d

Analoge Durchführung zu Vergleichsbeispiel V3 unter Verwendung des Polyesters 4 anstelle des Polyesters V1.

### Beispiel 5e

Analoge Durchführung zu Beispiel 5d unter Verwendung einer geringeren Menge (7 g) des Polyesters 4.

### Beispiel 6

In einem Doppelmantelgefäß mit angeschlossenem Thermostaten, Rückflusskühler, Blattrührer und Innenthermometer werden 42 g Propylacetat und 12,8 g Polyester 1 vorgelegt. Unter Rühren wird der Polyester bei 90 °C vollständig aufgelöst, 30 min gerührt und anschließend mit 0,15 g t-Butyl-per-2-ethylhexanoat versetzt. Um eine optimale Ausbeute freier Radikale entlang der. Polyesterketten zu bilden, wird diese Lösung über einen Zeitraum von 30 min bei 90 °C gerührt, bevor mittels einer Dosierpumpe eine Mischung aus 4 g Methylmethacrylat, 12 g Butylmethacrylat und weiteren 0,15 g t-Butyl-per-2-ethylhexanoat zügig zudosiert werden.

In Tabelle 2 sind die Ergebnisse der Pfropfversuche aus den Beispielen zusammengefaßt. Tabelle 2:

| | Start-Polyester | | | Pfropfprodukt | | | |
|---|---|---|---|---|---|---|---|
| Beispiel-Nr. | Nr. | ITA | M_{W} (UV) | ITA_{graft} | M_{w} (UV) | M_{w} (RI) | PMI (RI) |
| V3 | V1 | 0 | 18.900 | 0 | 18.400 | 28.800 | 2,0 |
| 5a | 1 | 1 | 11.700 | < 0,1 | 13.000 | 27.700 | 2,5 |
| 5b | 2 | 2 | 13.400 | 0,5 | 17.000 | 31.600 | 2,7 |
| 5c | 3 | 3 | 15.800 | 0,3 | 105.000 | 149.000 | 6,2 |
| 5d | 4 | 7 | 27.300 | n. b. | teilweise geliert | | |
| 5e | 4 | 7 | 27.300 | 0,7 | 96.000 | 114.000 | 7,2 |
| 6 | 1 | 1 | 11.700 | n. b. | 12.500 | 30.500 | 2,8 |

| | | | | | | | |
|---|---|---|---|---|---|---|---|
| ITA_{graft} = Gehalt an Itaconatwiederholungseinheiten im Copolyester(-block) des Profpfproduktes, bezogen auf dessen Gesamtgehalt an Polycarbonsäuren, Angabe in mol %, gemessen mit ¹H-NMR-Spektroskopie M_{w} (RI) = Massenmittleres Molgewicht (GPC, RI-Detektion), Angabe in g / mol PMI (RI) = Polymolekularitätsindex (GPC, RI-Detektion) n. b. = nicht bestimmt | | | | | | | |

Der Beweis einer erfolgreichen Pfropfcopolymersynthese ergibt sich primär aus dem Vergleich des Itaconatgehalts im Copolyesteranteil vor und nach der (Meth)acrylatpolymerisation. In den entsprechend analysierten Proben findet nach der NMR-Analyse ein Rückgang der olefinischen Signale um beispielsweise 2,7 mol % (Bsp. 5c), um 1,5 mol % (Bsp. 5b) bzw. um ca. 0,9 mol % (Bsp. 5a).
Der Vergleich der Molekulargewichte M_{w} des eingesetzten Polyesters und der entsprechenden UV-Analytik der Pfropfprodukte zeigt klar eine Zunahme des jeweiligen Molekulargewichts. Aus dem Vergleichsbeispiel V3 ist ferner ersichtlich, dass die mittels dieser Analysenmethode erhaltenen Vergleichswerte durchaus aussagekräftig bzgl. einer Pfropfung sind. Aus den aufgeführten Beispielen ist weiterhin abzuleiten, dass bei einem zu kleinen Itaconatanteil im Polyester nur in einem geringen Maße gepfropft wird und überwiegend Methacrylathomopolymere gebildet werden (siehe Bsp. 5a und 5b). Bei einem zu hohen Doppelbindungsanteil dagegen besteht die Gefahr einer Teilgelierung der Produktmischung (Bsp. 5d).
Wie Beispiel 5e belegt, kann die Vernetzungsgefahr bei höheren Itaconatgehalten im Polyester durch Reduktion des Polyesteranteils in der Reaktionsmischung für die Pfropfungsreaktion und damit des gesamten Itaconatgehalts kompensiert werden. Dies zeigt, daß bei der vorliegenden Erfindung neben der Bestimmung eines optimalen Itaconatgehalts im Copolyester auch der Gesamtitaconatgehalt in der Reaktionsmischung zur Synthese der erfindungsgemäßen Pfropfcopolymere zu optimieren ist.
Desweiteren ergibt sich der Beweis einer Pfropfcopolymerisation aus folgenden Ergebnissen zu Bsp. 5c. Der verwendete Polyester und PMMA sind grundsätzlich nicht mischbar. So wären in einem phasenseparierten Produkt Glasübergangstemperaturen von ca. 32 °C (Tg des eingesetzten Polyesters 3) und ca. 105 °C (T_{g} PMMA) zu erwarten. Tatsächlich findet man jedoch in der DSC-Untersuchung mit 14 °C und 78 °C deutlich niedrigere Werte, was eine Kompatibilisierung der Komponenten im Produkt anzeigt. Im Gegensatz dazu kann man bei einer nur geringen Ausbeute an Pfropfcopolymeren keinen solchen Effekt feststellen.
Insbesondere mittels Beispiel 5c konnte eine Lösung der gestellten Aufgabe entwickelt werden. Die beschriebene dispersionsartige Lösung ist auch nach einer Lagerung von mehr als fünf Monaten noch stabil. Bei Proben mit passend eingestellten Pfropfungsgrad ist somit klar eine Kompatibilisierung zwischen eigentlich unverträglichen Polyestern und Polymethacrylaten realisierbar. Mit einem geringen Anteil solcher Pfropfcopolymere ist es somit möglich, Polymermischungen aus Poly(meth)acrylaten und Polyestern zu realisieren. Das mögliche Anwendungsspektrum solcher Blends ist dabei als sehr umfassend zu betrachten. Als unvernetzte Systeme ist ihre Anwendung zum Beispiel als Bindemittel in Heißsiegellacken denkbar. Nachvernetzend durch Zugabe geeigneter Zuschlagsstoffe sind Anwendungen in dem Bereich der Dichtmassen denkbar. Ferner sind auch Anwendungen als Beschichtungsformulierung wie Pulverlacke möglich.
Durch die Verwendung solcher Formulierungen in den angesprochenen Anwendungsbereichen ist eine deutliche Erweiterung der Eigenschaftsprofile verfügbar.

### Beispiele für Substanzpolymersiation

### Beispiele 7 - 9

In einem Kolben mit Rührer werden Monomer und Polyester 1 in den in Tabelle 3 angegebenen Mengen eingewogen, auf 80 °C temperiert und so lange gerührt, bis eine homogene Flüssigkeit vorliegt. Durch anschließende Zugabe von 0,02 g t-Butyl-per-2-ethylhexanoat wird die Polymerisation gestartet. Nach einer Stunde wird das inzwischen feste Produkt abgekühlt. Die Ergebnisse sind in Tabelle 3 zusammengefaßt.

**Tabelle 3:**

| Beispiel | Monomer:Polyester | Monomer | M_{w} (UV) | M_{w} (RI) | Polyester M_{w} (UV) |
|---|---|---|---|---|---|
| 7 | 9g / 1g | MMA | 12.800 | 25.200 | 11.700 |
| 8 | 9g / 1g | n-BA | 12.400 | 77.300 | |
| 9 | 7,5g / 2,5g | n-BA | 14.000 | 16.100 | |

| | | | | | |
|---|---|---|---|---|---|
| MMA: Methylmethacrylat n-BA: n-Butylacrylat | | | | | |

Alle Eluogramme in der UV-Detektion sind monomodal. RI-Detektion führt zu multimodalen Eluogrammen.

Ein. Vergleich von RI- und UV-Detektion der einzelnen GPC-Resultate zu den aufgeführten Beispielen zeigt, dass insbesondere die Pfropfung von n-BA auf den Polyester des Typs 1 erfolgreich war. Das gleiche gilt für die Umsetzung des weniger aktiven MMA.

## Patentansprüche

1. Zusammensetzung dreier verschiedener Polymertypen A, B und AB,
**dadurch gekennzeichnet, dass**
➢ der Polymertyp A ein Copolyester ist, der unter Co-Kondensation von Itaconsäure hergestellt wurde
➢ der Polymertyp B ein (Meth)acrylathomo- und/oder -copolymer ist, enthaltend Standardmethacrytate und/oder Standardacrylate,
➢ der Polymertyp AB ein Pfropfcopolymer aus Polymertyp A und Polymertyp B ist und
dass die Menge an Polymertyp A zwischen 5 Gew.-% und 80 Gew.-% beträgt, dass die Menge an Polymertyp B zwischen 5 Gew.-% und 80 Gew.-% beträgt, dass die Menge an Polymertyp AB zwischen 10 Gew.-% und 80 Gew.-% beträgt,
bezogen auf die Gesamtmasse der Polymertypen A, B, AB und das Produkt kein Styrol oder Styrolderivat enthält.

2. Zusammensetzung dreier verschiedener Polymertypen A, B und AB gemäß Anspruch 1,
**dadurch gekennzeichnet, dass**
die Menge an Polymertyp A zwischen 5 Gew.-% und 60 Gew.-% beträgt,
die Menge an Polymertyp B zwischen 5 Gew.-% und 60 Gew.-% beträgt,
die Menge an Polymertyp AB zwischen 20 Gew.-% und 65 Gew.-% beträgt,
bezogen auf die Gesamtmasse der Polymertypen A, B, AB

3. Zusammensetzung dreier verschiedener Polymertypen A, B und AB gemäß Anspruch 2,
**dadurch gekennzeichnet, dass**
die Menge an Polymertyp A zwischen 5 Gew.-% und 40 Gew.-% beträgt,
die Menge an Polymertyp B zwischen 5 Gew.-% und 40 Gew.-% beträgt,
die Menge an Polymertyp AB zwischen 30 Gew.-% und 50 Gew.-% beträgt, bezogen auf die Gesamtmasse der Polymertypen A, B, AB.

4. Zusammensetzung dreier verschiedener Polymertypen A, B und AB gemäß Anspruch 1, **dadurch gekennzeichnet, dass** es sich bei Polymertyp A um einen Polyester handelt, dessen Anteil an Itaconsäure bezogen auf die Gesamtmenge an eingesetzten Polycarbonsäuren zwischen 0,1 Mol-% und 20 Mol-% beträgt.

5. Zusammensetzung dreier verschiedener Polymertypen A, B und AB gemäß Anspruch 4, **dadurch gekennzeichnet, dass** es sich bei Polymertyp A um einen Polyester handelt, dessen Anteil an Itaconsäure bezogen auf die Gesamtmenge an eingesetzten Polycarbonsäuren zwischen 1 Mol-% und 10 Mol-% beträgt.

6. Zusammensetzung dreier verschiedener Polymertypen A, B und AB gemäß Anspruch 5, **dadurch gekennzeichnet, dass** es sich bei Polymertyp A um einen Polyester handelt, dessen Anteil an Itaconsäure bezogen auf die Gesamtmenge an eingesetzten Polycarbonsäuren zwischen 2 Mol-% und 8 Mol-% beträgt.

7. Zusammensetzung dreier verschiedener Polymertypen A, B und AB gemäß Anspruch 1, **dadurch gekennzeichnet, dass** es sich bei dem Polymertyp AB um Pfropfcopolymere mit Polyesterhauptketten und Poly(meth)acrylatseitenketten handelt.

8. Zusammensetzung dreier verschiedener Polymertypen A, B und AB gemäß Anspruch 7, **dadurch gekennzeichnet, dass** der durchschnittliche Anteil der Poly(meth)acrylate-Anteile in der Gesamtmischung zwischen 20 Gew-% und 80 Gew-% beträgt.

9. Zusammensetzung dreier verschiedener Polymertypen A, B und AB gemäß Anspruch 8, **dadurch gekennzeichnet, dass** der durchschnittliche Anteil der Poly(meth)acrylate-Anteile in der Gesamtmischung zwischen 30 Gew-% und 70 Gew-% beträgt.

10. Zusammensetzung dreier verschiedener Polymertypen A, B und AB gemäß Anspruch 9, **dadurch gekennzeichnet, dass** der durchschnittliche Anteil der Poly(meth)acrylate-Anteile in der Gesamtmischung zwischen 40 Gew-% und 60 Gew-% beträgt.

11. Zusammensetzung dreier verschiedener Polymertypen A, B und AB gemäß Anspruch 7, **dadurch gekennzeichnet, dass** der Polymertyp AB ein Verträglichkeitsvermittler zwischen Poly(meth)acrylaten und Polyestern ist.

12. Verfahren zur Herstellung eines Pfropfcopolymers AB gemäß Anspruch 1,
**dadurch gekennzeichnet, dass**
unter gleichzeitigem Vorliegen eines Polymers des Typs A und eines Initiators zeitlich versetzt Monomere, die zu einem Polymer des Typs B führen, zugegeben und polymerisiert werden, und dass das System kein Styrol enthält.

13. Verfahren zur Herstellung eines Pfropfcopolymers AB gemäß Anspruch 12, **dadurch gekennzeichnet, dass** es sich bei dem Initiator um ein Peroxid oder eine Azoverbindung oder Mischungen handelt.

14. Verfahren zur Herstellung eines Pfropfcopotymers AB gemäß Anspruch 12, **dadurch gekennzeichnet, dass** durch Reaktion des Initiators mit Doppelbindungen von Itaconsäurewiederholungseinheiten im Polymer des Typs A reaktive Zentren für eine radikalische Polymerisation von (Meth)acrylaten gebildet werden.

15. Verfahren zur Herstellung eines Pfropfcopolymers AB gemäß Anspruch 12, **dadurch gekennzeichnet, dass** es sich bei dem Verfahren um eine Lösungspolymerisation oder Substanzpolymerisation handelt.

16. Verfahren zur Herstellung eines Pfropfcopolymers AB gemäß Anspruch 12, **dadurch gekennzeichnet, dass** das Polymer A und der Initiator vorgelegt und für eine Zeit zwischen 10 min und 60 min erhitzt werden bevor Monomere, die zu einem Polymer des Typs B führen, zur der Lösung gegeben werden.

17. Verfahren zur Herstellung eines Pfropfcopolymers AB gemäß Anspruch 12, **dadurch gekennzeichnet, dass** das Polymer A und Monomere, die zu einem Polymer des Typs B führen, vorgelegt werden bevor die Polymerisation initiiert wird.

18. Verwendung einer Zusammensetzung dreier verschiedener Polymertypen A, B und AB gemäß Anspruch 1 als Formulierungsbestandteil in Dichtmassen.

19. Verwendung einer Zusammensetzung dreier verschiedener Polymertypen A, B und AB gemäß Anspruch 1 als Formulierungsbestandteil in Heißsiegeliacken.

## Claims

1. Composition of three different polymer types A, B and AB,
**characterized in that**
➢ polymer type A is a copolyester which has been prepared by cocondensation of itaconic acid,
➢ polymer type B is a (meth)acrylate homo- and/or copolymer containing standard methacrylates and/or standard acrylates,
➢ polymer type AB is a graft copolymer composed of polymer type A and polymer type B and
**in that** the amount of polymer type A is between 5% by weight and 80% by weight,
**in that** the amount of polymer type B is between 5% by weight and 80% by weight,
**in that** the amount of polymer type AB is between 10% by weight and 80% by weight,
based on the total mass of polymer types A, B, AB and the product does not contain any styrene or styrene derivative.

2. Composition of three different polymer types A, B and AB according to Claim 1,
**characterized in that**
the amount of polymer type A is between 5% by weight and 60% by weight,
the amount of polymer type B is between 5% by weight and 60% by weight,
the amount of polymer type AB is between 20% by weight and 65% by weight,
based on the total mass of polymer types A, B, AB.

3. Composition of three different polymer types A, B and AB according to Claim 2, **characterized in that**
the amount of polymer type A is between 5% by weight and 40% by weight,
the amount of polymer type B is between 5% by weight and 40% by weight,
the amount of polymer type AB is between 30% by weight and 50% by weight,
based on the total mass of polymer types A, B, AB.

4. Composition of three different polymer types A, B and AB according to Claim 1, **characterized in that** polymer type A is a polyester whose content of itaconic acid based on the total amount of polycarboxylic acids used is between 0.1 mol% and 20 mol%.

5. Composition of three different polymer types A, B and AB according to Claim 4, **characterized in that** polymer type A is a polyester whose content of itaconic acid based on the total amount of polycarboxylic acids used is between 1 mol% and 10 mol%.

6. Composition of three different polymer types A, B and AB according to Claim 5, **characterized in that** polymer type A is a polyester whose content of itaconic acid based on the total amount of polycarboxylic acids used is between 2 mol% and 8 mol%.

7. Composition of three different polymer types A, B and AB according to Claim 1, **characterized in that** polymer type AB comprises graft copolymers with polyester main chains and poly(meth)acrylate side chains.

8. Composition of three different polymer types A, B and AB according to Claim 7, **characterized in that** the average content of poly(meth)acrylate contents in the overall mixture is between 20% by weight and 80% by weight.

9. Composition of three different polymer types A, B and AB according to Claim 8, **characterized in that** the average content of poly(meth)acrylate contents in the overall mixture is between 30% by weight and 70% by weight.

10. Composition of three different polymer types A, B and AB according to Claim 9, **characterized in that** the average content of poly(meth)acrylate contents in the overall mixture is between 40% by weight and 60% by weight.

11. Composition of three different polymer types A, B and AB according to Claim 7, **characterized in that** polymer type AB is a compatibilizer between poly(meth)acrylates and polyesters.

12. Process for preparing a graft copolymer AB according to Claim 1,
**characterized in that**
monomers which lead to a polymer of type B are added and polymerized with a time delay in the simultaneous presence of a polymer of type A and of an initiator, and **in that** the system does not contain any styrene.

13. Process for preparing a graft copolymer according to Claim 12, **characterized in that** the initiator is a peroxide or an azo compound or mixtures thereof.

14. Process for preparing a graft copolymer AB according to Claim 12, **characterized in that** reaction of the initiator with double bonds of repeat itaconic acid units in the polymer of type A forms reactive centres for a free-radical polymerization of (meth)acrylates.

15. Process for preparing a graft copolymer AB according to Claim 12, **characterized in that** the process is a solution polymerization or bulk polymerization.

16. Process for preparing a graft copolymer according to Claim 12, **characterized in that** the polymer A and the initiator are initially charged and are heated for a period between 10 min and 60 min before monomers which lead to a polymer of type B are added to the solution.

17. Process for preparing a graft copolymer AB according to Claim 12, **characterized in that** the polymer A and monomers which lead to a polymer of type B are initially charged before the polymerization is initiated.

18. Use of a composition of three different polymer types A, B and AB according to Claim 1 as a formulation constituent in sealants.

19. Use of a composition of three different polymer types A, B and AB according to Claim 1 as a formulation constituent in heat-sealing coatings.

## Revendications

1. Composition de trois types de polymères différents A, B et AB, **caractérisée en ce que**
- le type de polymère A est un copolyester, qui a été préparé par co-condensation d'acide itaconique,
- le type de polymère B est un homo- et/ou un copolymère (méth)acrylique, contenant des méthacrylates standard et/ou des acrylates standard,
- le type de polymère AB est un copolymère greffé constitué du type de polymère A et du type de polymère B, et
**en ce que** la quantité du type de polymère A est comprise entre 5 % en poids et 80 % en poids,
que la quantité du type de polymère B est comprise entre 5 % en poids et 80 % en poids,
que la quantité du type de polymère AB est comprise entre 10 % en poids et 80 % en poids,
par rapport au poids total des types de polymères A, B et AB, le produit ne contenant ni styrène, ni dérivé du styrène.

2. Composition de trois types de polymères différents A, B et AB selon la revendication 1, **caractérisé en ce que**
la quantité du type de polymère A est comprise entre 5 % en poids et 60 % en poids,
la quantité du type de polymère B est comprise entre 5 % en poids et 60 % en poids,
la quantité du type de polymère AB est comprise entre 20 % en poids et 65 % en poids,
par rapport au poids total des types de polymères A, B et AB.

3. Composition de trois types de polymères différents A, B et AB selon la revendication 2, **caractérisée en ce que**
la quantité du type de polymère A est comprise entre 5 % en poids et 40 % en poids,
la quantité du type de polymère B est comprise entre 5 % en poids et 40 % en poids,
la quantité du type polymère AB est comprise entre 30 % en poids et 50 % en poids,
par rapport au poids total des types de polymères A, B et AB.

4. Composition de trois types de polymères différents A, B et AB selon la revendication 1, **caractérisée en ce que**, pour ce qui concerne le type de polymère A, il s'agit d'un polyester dans lequel la proportion de l'acide itaconique, rapportée à la quantité totale des acides polycarboxyliques utilisés, est comprise entre 0,1 % en moles et 20 % en moles.

5. Composition de trois types de polymères différents A, B et AB selon la revendication 4, **caractérisée en ce que**, pour ce qui concerne le type de polymère A, il s'agit d'un polyester dans lequel la proportion de l'acide itaconique, rapportée à la quantité totale des acides polycarboxyliques utilisés, est comprise entre 1 % en moles et 10 % en moles.

6. Composition de trois types de polymères différents A, B et AB selon la revendication 5, **caractérisée en ce que**, pour ce qui concerne le type de polymère A, il s'agit d'un polyester dans lequel la proportion de l'acide itaconique, rapportée à la quantité totale des acides polycarboxyliques utilisés, est comprise entre 2 % en moles et 8 % en moles.

7. Composition de trois types de polymères différents A, B et AB selon la revendication 1, **caractérisée en ce que**, pour ce qui concerne le type de polymère AB, il s'agit de copolymères greffés comportant des chaînes principales de polyester et des chaînes latérales de poly(méth)acrylate.

8. Composition de trois types de polymères différents A, B et AB selon la revendication 7, **caractérisée en ce que** la proportion moyenne des parts de poly(méth)acrylates dans le mélange total est comprise entre 20 % en poids et 80 % en poids.

9. Composition de trois types de polymères différents A, B et AB selon la revendication 8, **caractérisée en ce que** la proportion moyenne des parts de poly(méth)acrylates dans le mélange total est comprise entre 30 % en poids et 70 % en poids.

10. Composition de trois types de polymères différents A, B et AB selon la revendication 9, **caractérisée en ce que** la proportion moyenne des parts de poly(méth)acrylates dans le mélange total est comprise entre 40 % en poids et 60 % en poids.

11. Composition de trois types de polymères différents A, B et AB selon la revendication 7, **caractérisée en ce que** le type de polymère AB est un agent de compatibilisation entre les poly(méth)acrylates et les polyesters.

12. Procédé de préparation d'un copolymère greffé AB selon la revendication 1, **caractérisé en ce que**, en présence simultanée d'un polymère du type A et d'un amorceur, on ajoute et on polymérise, avec décalage temporel, des monomères qui conduisent à un polymère du type B, et que le système ne contient pas de styrène.

13. Procédé de préparation d'un copolymère greffé AB selon la revendication 12, **caractérisé en ce que**, pour ce qui concerne l'amorceur, il s'agit d'un peroxyde ou d'un composé azoïque, ou de mélanges.

14. Procédé de préparation d'un copolymère greffé AB selon la revendication 12, **caractérisé en ce que**, par réaction de l'amorceur avec des doubles liaisons de motifs répétitifs acide itaconique, il y a dans le polymère du type A formation de centres réactifs pour une polymérisation radicalaire de (méth)acrylates.

15. Procédé de préparation d'un copolymère greffé AB selon la revendication 12, **caractérisé en ce que**, pour ce qui concerne le procédé, il s'agit d'une polymérisation en solution ou d'une polymérisation sans solvant.

16. Procédé de préparation d'un copolymère greffé AB selon la revendication 12, **caractérisé en ce qu'**on en place le polymère A et l'amorceur et qu'on les chauffe pendant une durée comprise entre 10 min et 60 min avant d'ajouter à la solution des monomères qui conduisent à un polymère de type B.

17. Procédé de préparation d'un copolymère greffé AB selon la revendication 12, **caractérisé en ce qu'**on met en place le polymère A et des monomères qui conduisent à un polymère de type B, avant d'amorcer la polymérisation.

18. Utilisation d'une composition de trois types de polymères différents A, B et AB selon la revendication 1 en tant que constituant de formulation dans des masses d'étanchéité.

19. Utilisation d'une composition de trois types de polymères différents A, B et AB selon la revendication 1 en tant que constituant de formulation dans des vernis thermosoudables.
